# EUROPÄISCHE PATENTSCHRIFT

(11) **EP 2 542 119 B1**
(45) Veröffentlichungstag und Bekanntmachung des Hinweises auf die Patenterteilung: **10.02.2016**
(21) Anmeldenummer: 11706562.3
(22) Anmeldetag: 01.03.2011
(51) Int. Cl.: A47B 95/00, F16B 12/26, E05D 15/06

(54) **BEFESTIGUNGSANORDNUNG**
FASTENING ARRANGEMENT
ARRANGEMENT DE FIXATION

(30) Priorität: 05.03.2010 DE 102010000643
(43) Veröffentlichungstag der Anmeldung: 09.01.2013
(73) Patentinhaber: Hettich-Heinze GmbH & Co. KG, 32139 Spenge (DE)
(72) Erfinder: POPPENBORG, Norbert, 32105 Bad Salzuflen (DE); SCHAEL, Oliver, 32278 Kirchlengern (DE); ANDSCHUS, Stefan, 32312 Lübbecke (DE); FELD, Steffen, 33378 Rheda-Wiedenbrück (DE); NOLTE, Frank, 49086 Osnabrück (DE); MEER, Tobias, 49080 Osnabrück (DE); PRIOR, Thomas, 32584 Löhne (DE)
(74) Vertreter: Dantz, Jan Henning
(86) Internationale Anmeldenummer: PCT/EP2011/053003
(87) Internationale Veröffentlichungsnummer: WO 2011/107461

(56) Entgegenhaltungen:
- WO-A1-2011/097283
- DE-B3-102005 057 525
- DE-B3-102006 050 678
- DE-U1-202008 002 540
- DE-U1-202008 011 872
- GB-A- 2 219 036
- US-A- 3 944 377
- US-A1- 2008 213 034

## Beschreibung

Die vorliegende Erfindung betrifft eine Befestigungsanordnung, insbesondere für Möbelteile, mit mindestens einem Montageelement, das mit einem Bauteil verklebt ist, wobei an dem Montageelement Befestigungsmittel ausgebildet sind.

Im Möbelbereich werden Beschläge meist mechanisch durch Schrauben oder Bolzen befestigt, die sowohl Zug- als auch Druckkräfte aufnehmen. Gerade im Bereich von Leichtbauplatten ist dies allerdings nur bedingt möglich, da die Deckschichten und die Mittelschicht aus Leichtbaumaterialien, wie Wabenplatten oder Schaum, nur begrenzt Zugkräfte aufnehmen können. Die Dicke der Deckschichten ist meist zu gering, um herkömmliche Befestigungselemente aufzunehmen.

Die US 3,944,377 A offenbart eine Befestigungseinrichtung zur winkelförmigen Verbindung von zwei Platten, wobei die Befestigungseinrichtung zwei Teile aufweist, die jeweils mit einer Leiste in eine Nut an der Platte eingreifen und mit der Platte verklebt sind. Die beiden Teile sind dann über Haltemittel aneinander befestigt.

Die GB 2 219 036 A zeigt einen Verbinder für Platten, bei dem zwei Basisabschnitte jeweils an einer Stirnseite einer Platte durch Schrauben festgelegt sind. Die Basisabschnitte sind jeweils von einer Abdeckung umgeben, die dann ein Filmscharnier miteinander verschwenkbar verbunden sind.

In der DE 20 2008 002 540 U1 ist ein Beschlag zum Festlegen einer Leichtbauplatte gezeigt, bei dem in einem Gehäuse Kanäle zur Verteilung von Leim ausgebildet sind. Dadurch kann das Gehäuse an den Deckplatten einer Leichtbauplatte angeklebt werden.

In der DE 20 2008 011 872 U1 ist ein Möbel offenbart, bei dem eine Rückwand über einen Klettverschluss fixiert ist, der an den Seitenwänden, der Deckplatte oder der Bodenplatte angebracht sein kann.

Es ist daher Aufgabe der vorliegenden Erfindung, eine Befestigungsanordnung, insbesondere für Möbelteile, zu schaffen, die eine einfache Montage von Beschlagsteilen bei hoher Festigkeit ermöglicht. aufweist. Weiterhin können insbesondere bei Mitnahmemöbeln kleinere Packmaße erzielt werden. Die Möbelplatten können flach gestapelt werden, wenn nur das Montageelement angebracht wurde. Die Höhe des Montageelements kann durch Packmaterial ausgeglichen werden. Ein raumgreifender Beschlag kann dann später bei der Montage des Mitnahmemöbels an dem jeweiligen Montageelement montiert werden. Diese Befestigungstechnik lässt sich neben dem Möbelbereich auch im Fahrzeugbau und anderen Bereichen einsetzen.

Diese Aufgabe wird mit einer Befestigungsanordnung mit den Merkmalen des Anspruches 1 gelöst.

Erfindungsgemäß ist das Montageelement mit einem Bauteil verklebt, wobei an dem Montageelement Befestigungsmittel ausgebildet sind, an denen ein Beschlagsteil festgelegt ist. Dadurch kann gerade im Möbelbereich eine Montage von Möbelplatten, beispielsweise Schiebetüren, erfolgen, indem das Beschlagsteil an dem verklebten Montageelement fixiert wird. Dies ermöglicht insbesondere die Verwendung von Leichtbauplatten, so dass eine stabile Befestigung auch dann erfolgen kann, wenn das zu befestigende Bauteil nur eine stabile Deckschicht aufweist. Weiterhin können insbesondere bei Mitnahmemöbeln kleinere Packmaße erzielt werden. Die Möbelplatten können flach gestapelt werden, wenn nur das Montageelement angebracht wurde. Die Höhe des Montageelements kann durch Packmaterial ausgeglichen werden. Ein raumgreifender Beschlag kann dann später bei der Montage des Mitnahmemöbels an dem jeweiligen Montageelement montiert werden. Diese Befestigungstechnik lässt sich neben dem Möbelbereich auch im Fahrzeugbau und anderen Bereichen einsetzen.

Vorzugsweise ist das Beschlagsteil an dem Montageelement über Rastmittel und/oder Klemmmittel festgelegt. Dies ermöglicht eine werkzeugfreie Montage, wobei auch andere Befestigungsmittel, wie in das Montageelement eingedrehte Schrauben oder Bolzen, eingesetzt werden können. Das Montageelement kann mindestens eine Nut oder Halteleiste für das Beschlagsteil aufweisen, so dass das Beschlagsteil in das Montageelement eingeschoben werden kann und gegebenenfalls über weitere Befestigungsmittel fixiert wird.

Gemäß der Erfindung sind mehrere Montageelemente mit dem Bauteil verklebt, die miteinander verbunden sind. Die Montageelemente können dabei über Scharnierelemente miteinander verbunden sein und z.B. auf einer Rolle aufgewickelt werden. Dies ermöglicht die Befestigung der Montageelemente in einem weitgehend automatisierten Serienverfahren, wobei die Montageelemente beispielsweise an einer Kante einer Möbelplatte angeklebt werden. Anschließend kann gewählt werden, welches der Montageelemente zur Befestigung der einzelnen Beschlagsteile eingesetzt wird. Die Klebstoffe können manuell oder maschinell auf die Montageelemente aufgebracht werden.

Das Beschlagsteil ist vorzugsweise als Schiebetürenbeschlag ausgebildet, wobei das Montageelement dann in einem von außen nicht sichtbaren Bereich auf eine Möbelplatte aufgeklebt ist. Auch andere Beschläge können mit Montageelementen fixiert sein, beispielsweise Scharniere, Auszugsführungen oder Griffe.

Für eine besonders stabile Befestigung weist das Montageelement auf der verklebten Seite mindestens einen Vorsprung auf, der an dem Bauteil abgestützt ist. Der mindestens eine Vorsprung kann dabei plattenförmig ausgebildet sein und an einer Kante des Bauteils abgestützt sein. Dadurch kann das Montageelement besonders gut Querkräfte aufnehmen, die von dem Vorsprung auf das Bauteil abgetragen werden. Der mindestens eine Vorsprung kann durch eine aufgeklebte Leiste überdeckt sein, so dass der Vorsprung optisch nicht nachteilig in Erscheinung tritt.

Vorteilhaft kann die beschriebene Befestigungsanordnung mit den im Möbelbau zunehmend verwendeten Leichtbauplatten genutzt werden. Bei Leichtbauplatten weicht die Mittelschicht generell in ihren chemischen und/oder physikalischen Eigenschaften von den zwei Deckschichten ab. Die Mittelschicht ist häufig mit Hohlräumen versehen oder besteht aus einem leicht zu durchdringenden Material. Bekannt sind Leichtbauplatten, bei denen die Mittelschicht aus leichten Hölzern wie z.B. Balsa bestehen. Es sind auch Leichtbauplatten bekannt, bei denen die Mittelschicht aus Fasermaterialien wie z.B. Hanf- oder Strohfasem aufgebaut ist. Weiterhin können in der Mittelschicht auch Hohlräume wie z.B. bei Strangpress-Röhrenspannplatten oder Wabenplatten erzeugt werden. Außerdem kann die Dichte zwischen Mittelschicht und Deckschicht variiert werden, um eine Leichtbauplatte zu erhalten. Denkbar ist auch, die Mittelschicht als Schaum auszuführen wie z.B. bei Schaumkernplatten. Weiterhin ist die Einbringung eines Materials geringerer Dichte wie z.B. Polystyrol-Schaum in den Verbund der Mittelschicht einer Spanplatte denkbar. Weiterhin ist es denkbar, zur Erhöhung der Stabilität zusätzlich weitere mit den physikalischen und/oder chemischen Eigenschaften der Deckschichten identische Zwischenschichten in das Verbundmaterial einzubringen. Die vorstehend genannten Bauweisen sind nur beispielhaft zu verstehen und bilden keine abschließende Aufzählung aller Varianten zur Bildung von Leichtbauplatten. Deckschichten der Leichtbauplatten sind bevorzugt darauf ausgelegt, Zugbelastungen Stand zu halten, während die Mittelschicht bevorzugt Druckbelastungen standhält. Eine weitere Betrachtung kann aus der Sicht eines DoppelT-Trägers, wie er aus dem Maschinenbau bekannt ist, vorgenommen werden. Die Mittelschicht einer Leichtbauplatte wirkt sich gemäß dieser Betrachtung weniger auf das Widerstandsmoment der Leichtbauplatte aus als die Deckschichten. Randseitig sind die Leichtbauplatten üblicherweise mit Kantenleisten versehen, die insgesamt die Grundfläche der Leichtbauplatte wie einen Rahmen zwischen sich einschließen. Dadurch kann mit der Befestigungsanordnung eine stabile Befestigung von Möbelplatten in Leichtbauweise erfolgen.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht eines ersten nicht zur Erfindung gehörenden Ausführungsbeispieles eines Montageelements;
- Figur 2: eine perspektivische Ansicht eines zweiten nicht zur Erfindung gehörenden Ausführungsbeispiels eines Montageelements;
- Figuren 3A bis 3D: mehrere perspektivische Ansichten einer nicht erfindungsgemäßen Befestigungsanordnung;
- Figuren 4A bis 4D: mehrere Ansichten der Montage einer erfindungsgemäßen Befestigungsanordnung;
- Figuren 5A und 5B: zwei Ansichten bei der Montage eines Beschlagsteils an der Befestigungsanordnung der Figuren 4;
- Figuren 6A bis 6C: Ansichten eines weiteren Ausführungsbeispiels einer erfindungsgemäßen Befestigungsanordnung; und
- Figuren 7A und 7B: zwei Ansichten eines weiteren Ausführungsbeispiels eines erfindungsgemäßen Montageelements bei der Montage.

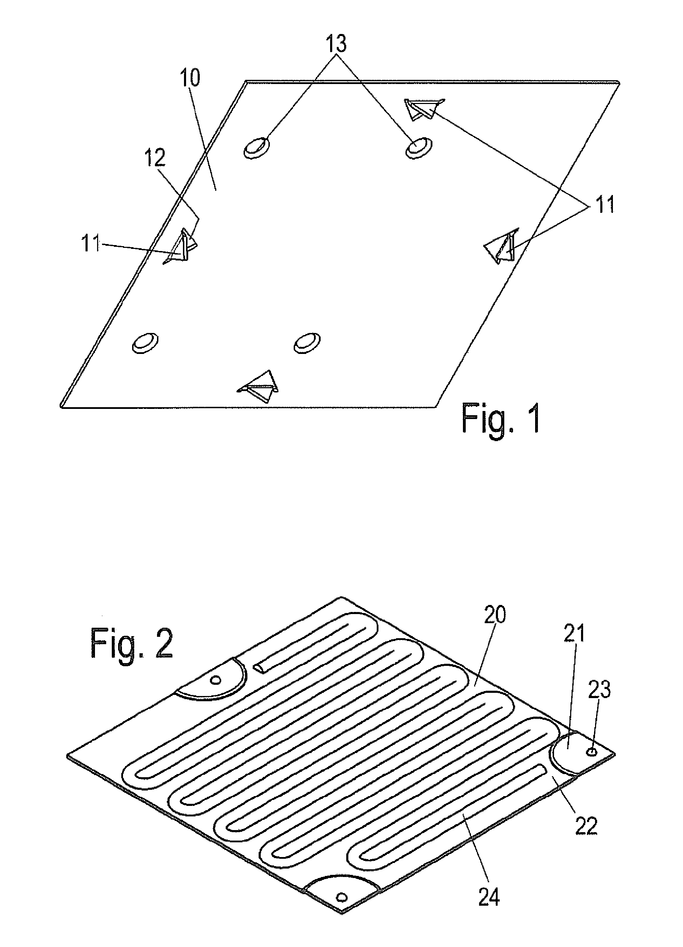

Figur 1 zeigt ein Montageelement 10, die mehrere scharfkantige Vorsprünge 11 aufweist, die von der Platte 10 hervorstehen. Die Vorsprünge 11 sind durch Ausstanzungen 12 gebildet und dienen zum Einstechen in eine Deckschicht einer Leichtbauplatte und damit zur Vorfixierung im Montageprozess. Anschließend kann an dem Montageelement 10 über Befestigungsmittel eine Montage eines Beschlagsteils erfolgen, wobei an der Montageelement 10 mehrere Öffnungen 13 ausgeformt sind. Vor dem Einstechen in die Leichtbauplatte wird flächig Klebstoff auf die der Leichtbauplatte zugewandte Seite des Montagelements 10 aufgetragen, um das Montageelement 10 mit der Oberfläche der Leichtbauplatte zu verkleben.

In Figur 2 ist ein modifiziertes Montageelement 20 gezeigt, das mehrere hervorstehende Auflager 21 aufweist. Die Auflager 21 können mittels Klebepunkten 23 fixiert werden, wobei der Klebstoff als schnell aushärtender Klebstoff ausgebildet ist. Der schnell aushärtende Klebstoff dient zur Vorfixierung des Montageelements 20 im Montageprozess. In dem Bereich zwischen den Auflagern ist an einem zurückspringenden plattenförmigen Bereich 22 schlaufenförmig Klebemittel 24 aufgetragen. Das Klebemittel 24 kann zur Aushärtung länger benötigen als das Klebemittel der Klebepunkte 23.

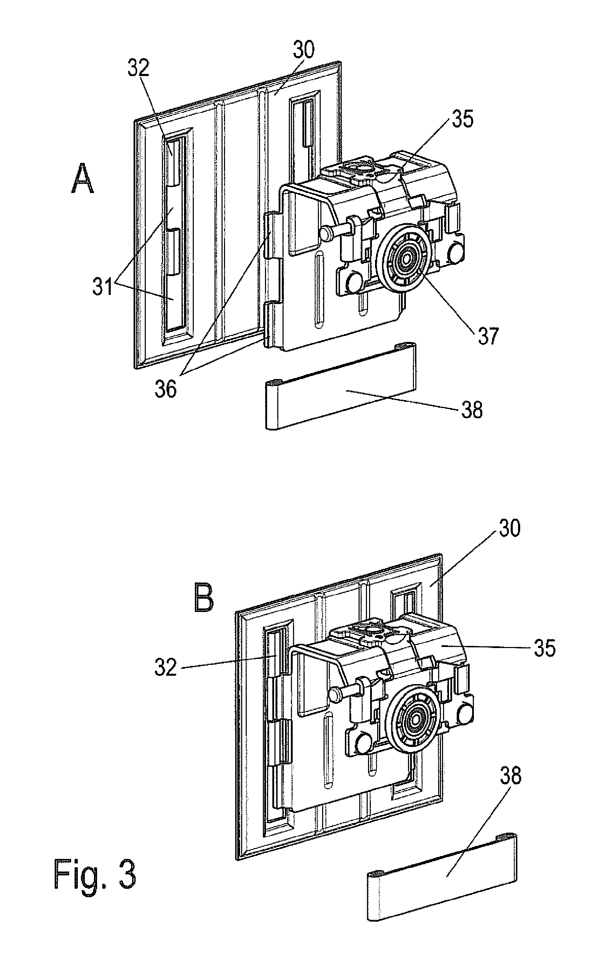

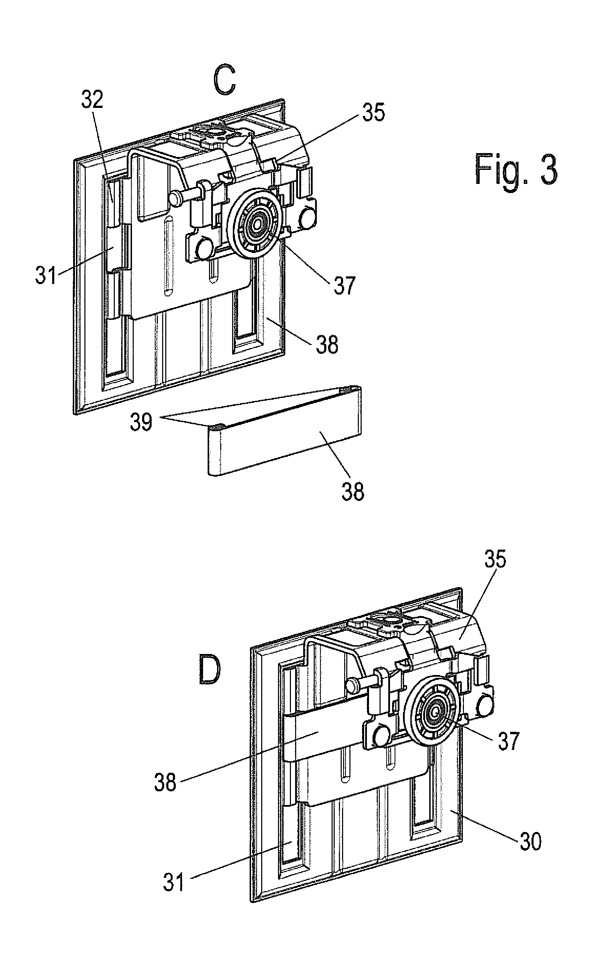

In Figur 3A bis 3D ist eine Befestigungsanordnung mit einem Montageelement 30 gezeigt, die an einem Bauteil, wie einer Möbelplatte, rückseitig festgeklebt ist. Das Montageelement 30 umfasst zwei voneinander beabstandete parallele Nuten 31, an denen Aufnahmetaschen 32 zur Festlegung eines Beschlags 35 angeordnet sind. Der Beschlag 35 ist als Schiebetürbeschlag ausgebildet und umfasst eine Laufrolle 37, die an einem Schenkel des Beschlags 35 drehbar gelagert ist. An dem gegenüberliegenden Schenkel sind Stege 36 ausgebildet, die zur Montage in die Nuten 31 eingefügt werden können (Figur 3B), wobei das Beschlagsteil 35 dann innerhalb der Nuten 31 in die Taschen 32 verschoben wird (Figur 3C). Zur Sicherung des Beschlags 35 in der montierten Position ist eine Klammer 38 vorgesehen, die an gegenüberliegenden Seiten Raststege 39 aufweist, die in die Nuten 31 eingefügt werden. Dadurch wird eine Verschiebebewegung des Beschlagsteils 35 innerhalb der Nuten 31 verhindert, so dass das Beschlagsteil 35 fest an dem Montageelement 30 fixiert ist. Die Kräfte der hängenden Möbelplatte werden von dem Montageelement 30 auf die Stege 36 an dem Beschlag 35 übertragen. Die Klammer 38 dient vorwiegend der Sicherung des Beschlags 35 im Montageelement 30.

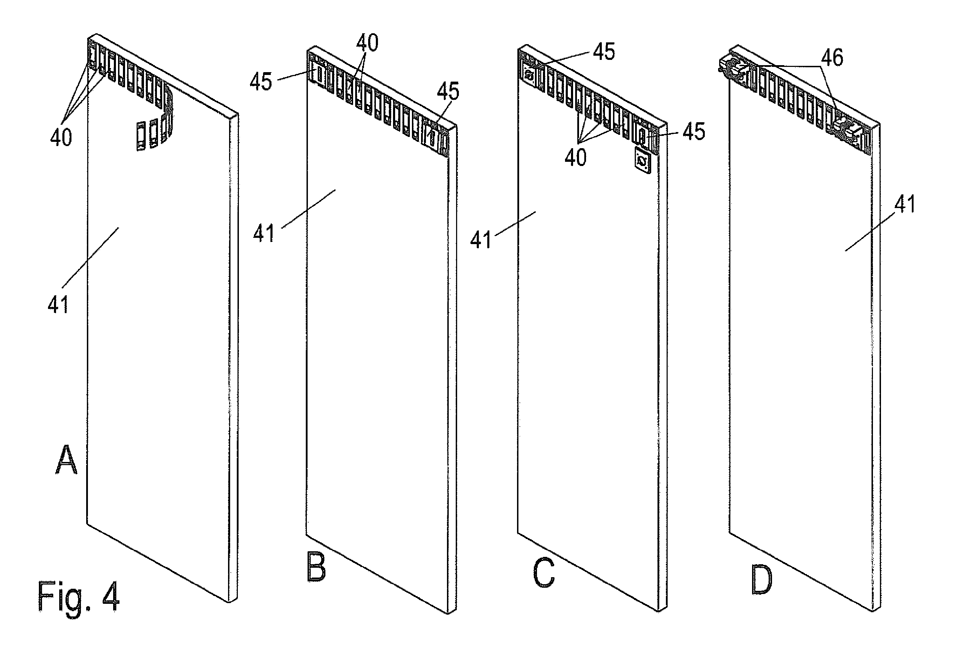

In den Figuren 4A bis 4D ist ein weiteres Ausführungsbeispiel mit Montageelementen 40 gezeigt, die über Verbindungselemente, beispielsweise ein Folienband, Seile oder andere Elemente, aneinander gekoppelt sind. Die Montageelemente 40 sind an einer Möbelplatte 41 an einer oberen Kante festgeklebt. An den Montageelementen 40 werden Platten 45 als Beschlagsteile montiert, wobei hierfür entsprechende Befestigungsmittel an den Montageelementen 40 ausgebildet sind. Die Montageelemente 40 sind dabei in einem vorbestimmten Abstand zueinander gehalten, während die plattenförmigen Beschlagsteile 45 gleichzeitig an mehreren Montageelementen 40 fixiert sind. An den Beschlagsteilen 45 können dann weitere Beschlagsteile 46, beispielsweise Schiebetürenbeschläge, befestigt werden (Figur 4D).

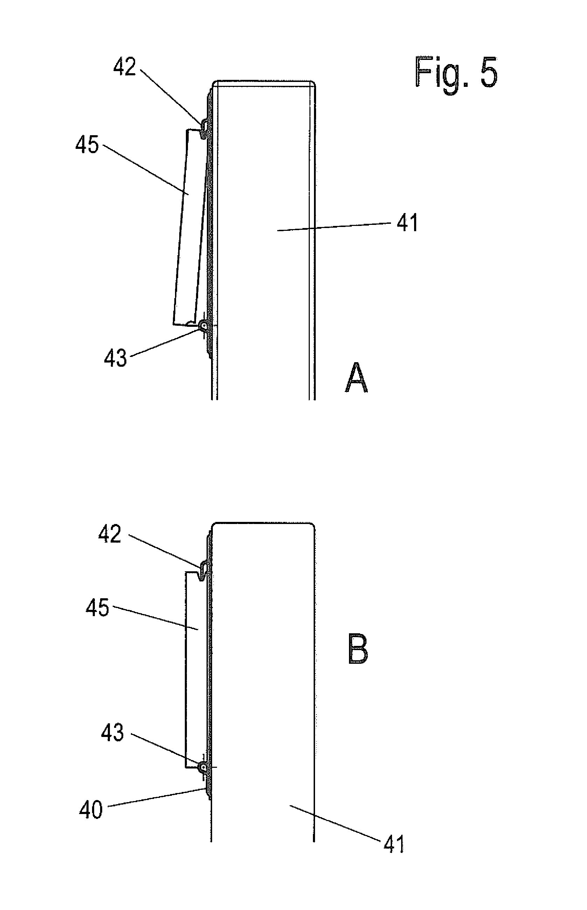

Die Befestigung des Beschlagsteils 45 an den Montageelementen 40 ist in den Figuren 5A und 5B dargestellt. Das Beschlagsteil 45 wird zunächst an einer oberen Klammer 42 der Montageelemente 40 eingefügt und dann an einer unteren Rastnase 43 verrastet, wobei das Beschlagsteil 45 verschwenkt wird. Dadurch kann insbesondere eine hängende Festlegung der Möbelplatte 41 erfolgen.

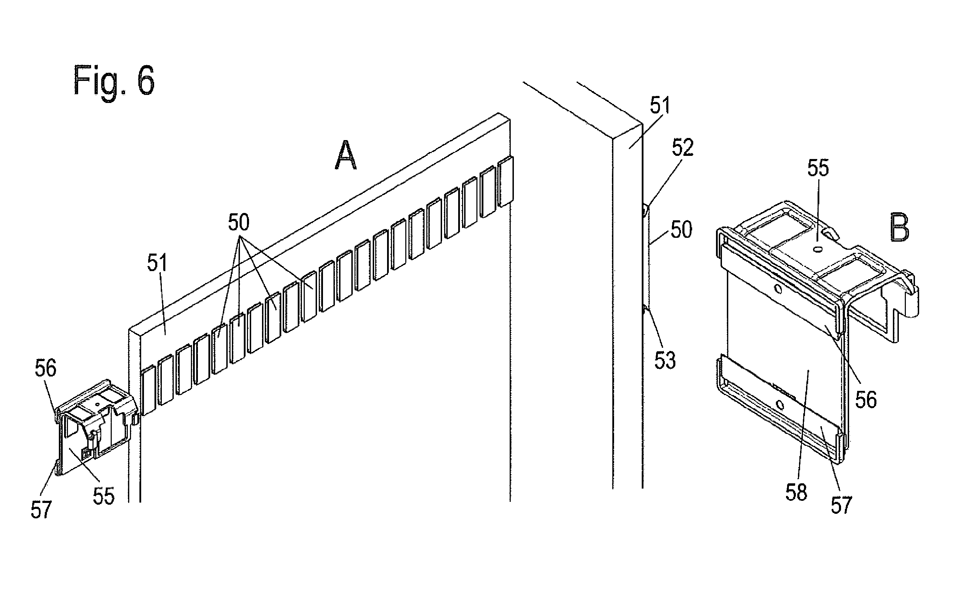

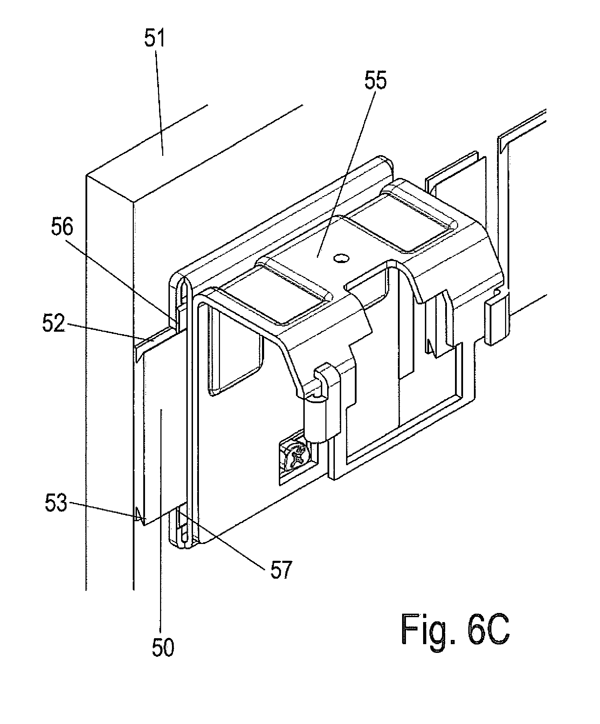

In den Figuren 6A und 6B ist ein weiteres Ausführungsbeispiel einer Befestigungsanordnung gezeigt, bei der im Bereich einer oberen Kante eines plattenförmigen Bauteils 51 eine Reihe von Montageelementen 50 verklebt sind. Die Montageelemente 50 können über Haltemittel miteinander verbunden sein und dienen zur Festlegung eines Beschlagsteils 55. An jedem Montageelement 50 ist ein oberer Vorsprung 52 ausgebildet, der beabstandet von der Oberfläche des plattenförmigen Bauteils 51 angeordnet ist. Auch ein unterer leistenförmiger Vorsprung 53 ist beabstandet von der Oberfläche des plattenförmigen Bauteils 51 angeordnet, so dass das Beschlagsteil 55 in dem zwischen dem Vorsprung 52 bzw. 53 und der Oberfläche des plattenförmigen Bauteils 51 gebildeten Spalt fixiert werden kann. Hierfür sind an dem Beschlagsteil 55 eine obere Leiste 56 und eine untere Leiste 57 vorgesehen, die an einer Rückwand 58 montiert sind. Zumindest eine der Leisten 56 und 57 kann verschiebbar ausgebildet sein, so dass das Beschlagsteil 55 an dem Montageelement 50 verrastet werden kann. Die Figur 6C zeigt eine Spannvorrichtung 59, hier ausgeführt als Exzenter, um das Beschlagsteil 55 an den Montagelementen 50 klemmend festzulegen.

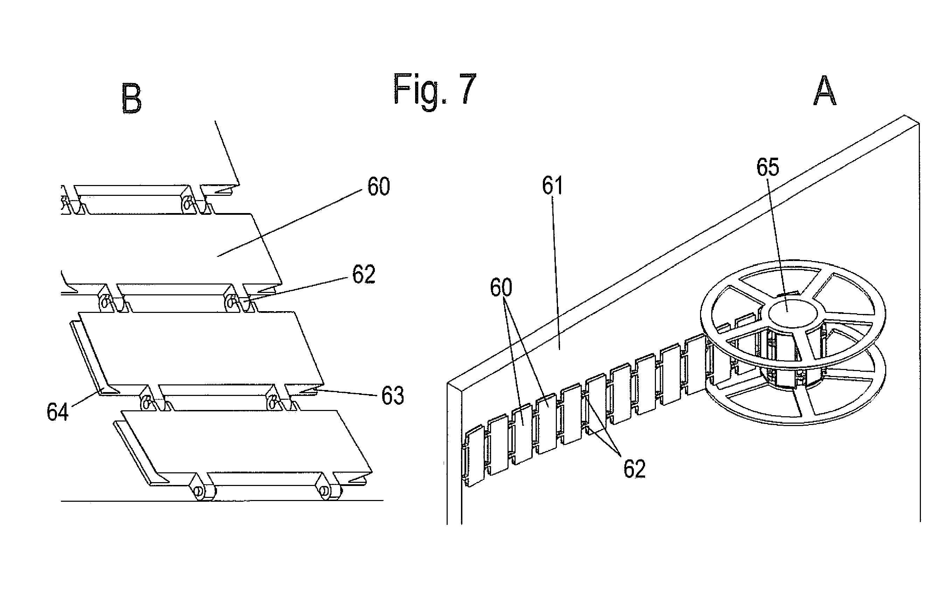

In den Figuren 7A und 7B ist eine weitere Ausführungsform mit Montageelementen 60 gezeigt, die über Scharniergelenke 62 aneinander gehalten sind. An jedem Montageelement 60 ist eine stirnseitige Nut 63 und an der gegenüberliegenden Seite eine stirnseitige Nut 64 ausgebildet, in die ein Vorsprung eines Beschlagsteils zur Befestigung eingefügt werden kann. Die Montageelemente 60 sind durch die Scharniergelenke 62 flexibel ausgebildet und können auf einer Rolle 65 aufgewickelt werden. Dadurch können die Montageelemente 60 auf einfache Weise auch in einem teilweise automatisierten Verfahren auf eine Platte 61 aufgeklebt werden. Die Befestigung der Beschlagsteile kann wie bei dem vorangegangenen Ausführungsbeispiel erfolgen.

### Bezugszeichenliste

- 10: Montageelement
- 11: Vorsprung
- 12: Ausstanzung
- 13: Öffnung
- 20: Montageelement
- 21: Auflager
- 22: Bereich
- 23: Klebepunkt
- 24: Klebemittel
- 30: Montageelement
- 31: Nut
- 32: Aufnahmetasche
- 35: Beschlag
- 36: Steg
- 37: Laufrolle
- 38: Klammer
- 39: Raststeg
- 40: Montageelement
- 41: Möbelplatte
- 42: Klammer
- 43: Rastnase
- 45: Beschlagsteil
- 46: Beschlagsteil
- 50: Montageelement
- 51: Bauteil
- 52: Vorsprung
- 53: Vorsprung
- 55: Beschlagsteil
- 56: Leiste
- 57: Leiste
- 58: Rückwand
- 59: Spannvorrichtung
- 60: Montageelement
- 61: Platte
- 62: Scharniergelenk
- 63: Nut
- 64: Nut
- 65: Rolle

## Patentansprüche

1. Befestigungsanordnung, insbesondere für Möbelteile, mit mindestens einem Montageelement (40, 50, 60), das mit einem Bauteil (41, 51, 61) verklebt ist, wobei das Bauteil als Leichtbauplatte mit zwei Deckschichten und einer dazwischen angeordneten Mittelschicht ausgebildet ist und an dem Montageelement (40, 50, 60) Befestigungsmittel (42, 43, 52, 53, 63, 64) ausgebildet sind, an denen ein Beschlagsteil (45, 55) festgelegt ist, **dadurch gekennzeichnet, dass** mehrere Montageelemente (40, 50, 60) mit dem Bauteil (41, 51, 61) verklebt sind, die miteinander verbunden sind.

2. Befestigungsanordnung nach Anspruch 1, **dadurch gekennzeichnet, dass** das Beschlagsteil (45, 55) an dem Montageelement (40, 50, 60) über Rastmittel und/oder Klemmmittel festgelegt ist.

3. Befestigungsanordnung nach Anspruch 1 oder 2, **dadurch gekennzeichnet, dass** an dem Montageelement (40, 50, 60) mindestens eine Nut (52, 53) oder Halteleiste (42, 43) für das Beschlagsteil (45, 55) ausgebildet ist.

4. Befestigungsanordnung nach einem der Ansprüche 1 bis 3, **dadurch gekennzeichnet, dass** die Montageelemente (40, 50, 60) über Scharnierelemente (62) miteinander verbunden sind und auf einer Rolle (65) aufwickelbar sind.

5. Befestigungsanordnung nach einem der Ansprüche 1 bis 4, **dadurch gekennzeichnet, dass** die Montageelemente (40, 50, 60) an einer Kante einer Möbelplatte angeklebt sind.

6. Befestigungsanordnung nach einem der Ansprüche 1 bis 5, **dadurch gekennzeichnet, dass** das Beschlagsteil (45, 55) als Schiebetürenbeschlag ausgebildet ist.

7. Befestigungsanordnung nach einem der Ansprüche 1 bis 6, **dadurch gekennzeichnet, dass** das Montageelement auf der verklebten Seite mindestens einen Vorsprung aufweist, der an dem Bauteil abgestützt ist.

8. Befestigungsanordnung nach Anspruch 7, **dadurch gekennzeichnet, dass** der mindestens eine Vorsprung plattenförmig ausgebildet ist und an einer Kante des Bauteils abgestützt ist.

9. Befestigungsanordnung nach einem der Ansprüche 1 bis 8, **dadurch gekennzeichnet, dass** der mindestens eine Vorsprung durch eine aufgeklebte Leiste überdeckt ist.

## Claims

1. A fastening arrangement, especially for furniture parts, comprising at least one mounting element (40, 50, 60) which is glued together with a component (41, 51, 61), whereby the component is arranged as a lightweight building board with two cover layers and an interposed middle layer and whereby fastening means (42, 43, 52, 53, 63, 64) to which a fitting part (45, 55) is attached are arranged on the mounting element (40, 50, 60), **characterized in that** several mounting elements (40, 50, 60) are glued together with the component (41, 51, 61) which are connected with one another.

2. A fastening arrangement according to claim 1, **characterized in that** the fitting part (45, 55) is fixed to the mounting element (40, 50, 60) via locking means and/or clamping means.

3. A fastening arrangement according to claim 1 or 2, **characterized in that** at least one groove (52, 53) or holding strip (42, 43) for the fitting part (45, 55) is arranged on the mounting element (40, 50, 60).

4. A fastening arrangement according to one of the claims 1 to 3, **characterized in that** the mounting elements (40, 50, 60) are connected via hinge elements (62) with each other and can be wound up on a roll (65).

5. A fastening arrangement according to one of the claims 1 to 4, **characterized in that** the mounting elements (40, 50, 60) are glued onto an edge of a furniture board.

6. A fastening arrangement according to one of the claims 1 to 5, **characterized in that** the fitting part (45, 55) is arranged as a sliding door fitting.

7. A fastening arrangement according to one of the claims 1 to 6, **characterized in that** the mounting element comprises at least one projection on the glued side which is supported on the component.

8. A fastening arrangement according to claim 7, **characterized in that** the at least one projection is arranged in a board-like manner and is supported on an edge of the component.

9. A fastening arrangement according to one of the claims 1 to 8, **characterized in that** the at least one projection is covered by a strip glued onto the same.

## Revendications

1. Dispositif de fixation, en particulier pour des parties de meuble, avec au moins un élément de montage (40, 50, 60) qui est collé à un composant (41, 51, 61), dans lequel le composant est conçu comme un panneau sandwich avec deux couches de couverture et une couche intermédiaire disposée entre elles et dans lequel sont formés sur l'élément de montage (40, 50, 60) des moyens de fixation (42, 43, 52, 53, 63, 64) sur lesquels une partie formant ferrure (45, 55) est fixée, **caractérisé en ce que** plusieurs éléments de montage (40, 50, 60) qui sont reliés entre eux sont collés au composant (41, 51, 61).

2. Dispositif de fixation selon la revendication 1, **caractérisé en ce que** la partie formant ferrure (45, 55) est fixée à l'élément de montage (40, 50, 60) par des moyens d'enclenchement et/ou des moyens de serrage.

3. Dispositif de fixation selon la revendication 1 ou 2, **caractérisé en ce qu'**est formée sur l'élément de montage (40, 50, 60) au moins une gorge (52, 53) ou un bandeau de maintien (42, 43) pour la partie formant ferrure (45, 55).

4. Dispositif de fixation selon l'une des revendications 1 à 3, **caractérisé en ce que** les éléments de montage (40, 50, 60) sont reliés entre eux par des éléments de charnière (62) et peuvent être déroulés sur un galet (65).

5. Dispositif de fixation selon l'une des revendications 1 à 4, **caractérisé en ce que** les éléments de montage (40, 50, 60) sont collés sur une arête d'un panneau de meuble.

6. Dispositif de fixation selon l'une des revendications 1 à 5, **caractérisé en ce que** la partie formant ferrure (45, 55) est conformée comme une ferrure de porte coulissante.

7. Dispositif de fixation selon l'une des revendications 1 à 6, **caractérisé en ce que** l'élément de montage présente sur le côté collé au moins une saillie qui s'appuie sur le composant.

8. Dispositif de fixation selon la revendication 7, **caractérisé en ce que** l'au moins une saillie est en forme de plaque et s'appuie sur une arête du composant.

9. Dispositif de fixation selon l'une des revendications 1 à 8, **caractérisé en ce que** l'au moins une saillie est recouverte par un bandeau collé.
